# EUROPÄISCHE PATENTSCHRIFT

(11) **EP 0 698 239 B1**
(45) Veröffentlichungstag und Bekanntmachung des Hinweises auf die Patenterteilung: **22.01.1997**
(21) Anmeldenummer: 94913482.9
(22) Anmeldetag: 02.05.1994
(51) Int. Cl.: G06F 11/00

(54) **VERFAHREN ZUR MASCHINELLEN ÜBERWACHUNG DES ABLAUFS EINES PROGRAMMSYSTEMS**
PROCESS FOR MACHINE MONITORING OF THE OPERATION OF A PROGRAM SYSTEM
PROCEDE PERMETTANT DE CONTROLER PAR MACHINE LE DEROULEMENT D'UN SYSTEME DE PROGRAMMES

(30) Priorität: 12.05.1993 DE 4315944
(43) Veröffentlichungstag der Anmeldung: 28.02.1996
(73) Patentinhaber: SIEMENS AKTIENGESELLSCHAFT, 80333 München (DE)
(72) Erfinder: SCHLEIERMACHER, Adolf, Dr., D-81673 München (DE); URBAN, Josef, D-80997 München (DE)
(86) Internationale Anmeldenummer: DE9400482
(87) Internationale Veröffentlichungsnummer: WO9427221

(56) Entgegenhaltungen:
- EP-A- 0 307 075
- ACM SIGPLAN NOTICES, Bd.27, Nr.7, Juli 1992, NEW YORK, US Seiten 32 - 43 URS HÖLZLE ET AL. 'Debugging Optimized Code with Dynamic Deoptimization'

## Beschreibung

In Realzeit-kritischen Softwaresystemen, z.B. Vermittlungssystemen, muß sichergestellt sein, daß gewisse Operationen innerhalb einer festgesetzten Zeitspanne ausgeführt werden. Ein Werkzeug zur Überwachung eines solchen Realzeitsystems sollte den regulären Betriebsablauf so wenig wie möglich verzögern, damit keine der Zeitanforderungen verletzt wird. Im günstigsten Fall sollte dieses Überwachungswerkzeug nur im Bedarfsfall und nur in begrenztem Umfang hinzugeschaltet werden, sodaß das Realzeitsystem im normalen Betrieb ohne Aktivierung des Überwachungswerkzeugs überhaupt nicht belastet wird.

Bei der Entwicklung von Realzeit-kritischen Softwaresystemen werden gewöhnlich Programmiersprachen verwendet, die die Definition von Unterprogrammen erlauben. Die Abarbeitung eines solchen Unterprogramms wird durch Aufruf aus einem anderen Programm angestoßen. Bei einem Unterprogrammaufruf wird der Unterprogrammrumpf, versehen mit den aktuellen Parameterwerten aus dem Programm, ausgeführt und anschließend wird mit der dem Unterprogrammaufruf folgenden Anweisung im aufrufenden Programm fortgefahren. Als Anweisung in einem Unterprogramm kann ein solcher Unterprogrammaufruf wiederum innerhalb des Unterprogrammrumpfes stehen, was zu einer Verschachtelung von Unterprogrammaufrufen führt.

Unterprogramme können dazu verwendet werden, um ein Softwaresystem in überschaubare Anweisungsblöcke zu strukturieren. Der Beginn und das Ende der Ausführung eines Unterprogramms stellen damit markante Ereignisse dar, die den Ablauf des Softwaresystems widerspiegeln.

Die der Erfindung zugrundliegende Aufgabe besteht darin, ein Verfahren zur maschinellen Überwachung eines Programmsystems anzugeben, das es ermöglicht, Beginn und Ende der Ausführung beliebig ausgewählter Unterprogramme des Programmsystems zu überwachen. Dabei sind die besonderen Gegebenheiten eines prozeßorientierten Realzeitsystems zu berücksichtigen. Diese Aufgabe wird durch eine Erfindung gemäß den Merkmalen des Anspruchs 1 gelöst.Weiterbildungen der Erfindung ergeben sich aus den Unteransprüchen.

Die Vorteile des Verfahrens liegen darin,
- daß in dem von einem Compiler erzeugten Code des Unterprogramms nur an einer Stelle eingegriffen wird, um damit sowohl Beginn als auch Ende der Abarbeitung des Unterprogramms zu erfassen;
- daß keine weitergehenden Bedingungen an die Übersetzung des Endes des Unterprogramms gestellt werden; es wird beispielsweise nicht gefordert, daß nur ein Rücksprungbefehl verwendet wird und dieser am Ende der Codesequenz der übersetzten Unterprogrammdefinition steht;
- daß die Umlenkung des Unterprogrammaufrufs und Unterprogrammendes unter Verwendung von Interruptbefehlen realisiert wird; durch die Abstützung auf den Interruptmechanismus wird der Einsatz des Verfahrens in prozeßorientierten Systemen ermöglicht;
- daß die durch die Interruptbefehle realisierten Beobachtungspunkte dynamisch, also während des Systembetriebs, hinzugeschaltet und wieder entfernt werden können; und daß die Überwachung von parallel oder pseudoparallel ablaufenden Unterprogrammen in einem prozeßorientierten System möglich ist;
- daß auch rekursive Unterprogramme überwacht werden können.

Die Art und Weise, in der die Beobachtungspunkte (Interruptbefehle) gesetzt werden, und die gezielte Anwendbarkeit auf ausgewählte Unterprogramme tragen dazu bei, daß mit diesem Verfahren die Zusatzbelastung des Realzeitsystems durch die Überwachung nur im Bedarfsfall vorhanden und dann nur auf einen ausgewählten Systemteil begrenzt ist. Somit wird die Ablaufverzögerung des gesamten Systems und die Möglichkeit einer Verletzung einer Realzeitanforderung minimal gehalten.

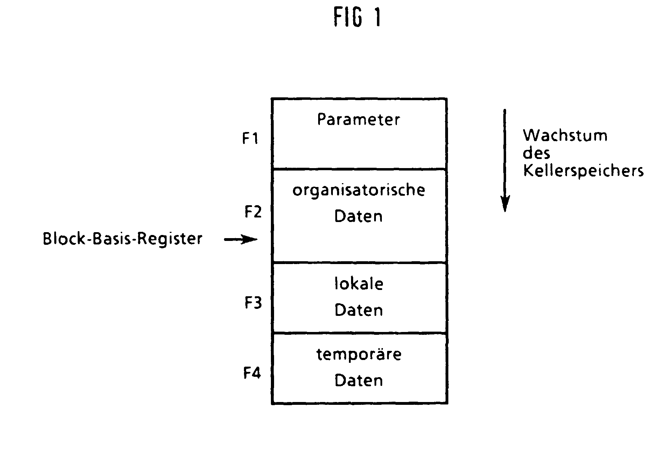

Für das Verfahren wird die Art und Weise ausgenutzt, in der ein Compiler den Aufruf und die Definition von Unterprogrammen in ausführbaren Maschinencode umsetzt. Dies geschieht gewöhnlich dadurch, daß der Aufruf des Unterprogramms in eine Codesequenz übersetzt wird, die u.a. die aktuellen Parameter und die Codeadresse der folgenden Anweisung des aufrufenden Programms auf einen Kellerspeicher bringt; diese Adresse ist die Rückkehradresse, bei der nach Ende des Unterprogramms mit der Befehlsabarbeitung beim aufrufenden Programm fortgefahren wird. Die Codesequenz wird schließlich mit einem Sprungbefehl abgeschlossen, der als Ziel den Anfang der Befehlsfolge hat, die für die Unterprogrammdefinition erzeugt wurde. Die Befehlsfolge der Unterprogrammdefinition beginnt mit einer Codesequenz, die der Organisation des Unterprogrammaufrufs dient (Überlaufbehandlung des Kellerspeichers, Übernahme der aktuellen Parameter usw.), also dem sog. Unterprogrammprolog, erst dann folgt der Code, der den einzelnen Anweisungen des Unterprogramms entspricht. Die Übersetzung jeder Unterprogrammdefinition beginnt damit immer nach dem gleichen Schema. Analog zum Unterprogrammbeginn wird ebenfalls Code zur Organisation der Unterprogrammendebearbeitung erzeugt, der sog. Unterprogrammepilog. Es wird nicht vorausgesetzt, daß dieser Epilog nur einmal vorhanden ist und am Ende der für die Unterprogrammdefinition erzeugten Codesequenz steht. Der Epilog enthält einen Sprungbefehl zur Beendigung des Unterprogramms. Dieser Sprungbefehl setzt jedoch voraus, daß sich seine Zieladresse an einer bestimmten Stelle des Kellerspeichers befindet. Dies ist aber gerade die Stelle, an der beim Unterprogrammaufruf die Rückkehradresse abgelegt wurde. Es wird somit an die dem Unterprogrammaufruf folgende Anweisung im rufenden Programm gesprungen. Der Code eines Unterprogramms operiert also mit Daten, die im Kellerspeicher abgespeichert sind. Der gesamte Kellerbereich, der für einen Unterprogrammaufruf notwendig ist, wird im folgenden als Aktivierungsblock bezeichnet und ist in Figur 1 schematisch dargestellt. Er enthält ein Feld F1, in dem die aktuellen Parameter beim Aufruf des Unterprogramms enthalten sind. In einem Feld F2 sind organisatorische Daten enthalten, z.B. die Rücksprungadresse. Das Feld F3 enthält lokale Daten, die während des Ablaufs des Unterprogramms erzeugt und verwendet werden und das Feld F4 enthält temporäre Daten. Die Adresse des Aktivierungsblockes kann z.B. in einem Blockbasisregister enthalten sein, also einem Maschinenregister eines Prozessors.

Um nun alle Aufrufe eines Unterprogramms erkennen zu können, wird der erste Befehl der übersetzten Unterprogrammdefinition mit einem Interruptbefehl überschrieben. Das wesentliche ist dabei, daß mit einem einzigen Interruptbefehl am Anfang des Unterprogramms sowohl Anfang als auch Ende der Abarbeitung des Unterprogramms überwacht werden können.

Ein Aufruf des Unterprogramms bewirkt damit eine Softwareunterbrechung. Bei der Behandlung des Interruptbefehls werden Vorbereitungen getroffen, um auch das Ende der Unterprogrammbearbeitung verfolgen zu können. Dazu wird in einer zweiten Tabelle ein temporärer Eintrag angelegt, der einen zweiten Interruptbefehl enthält und in den die Rückkehradresse des Unterprogrammaufrufs abgelegt wird. Am Kellerspeicher wird diese Adresse durch die Adresse des Tabelleneintrags ersetzt, sodaß bei Unterprogrammende nicht an der Aufrufstelle, sondern in diesem Eintrag der zweiten Tabelle fortgefahren wird. Der Eintrag in der zweiten Tabelle erfolgt also dynamisch bei jedem Aufruf eines überwachten Unterprogramms. Dies geschieht laufzeiteffizient, da nur die Rückkehradresse einzutragen ist.

Die Interruptbehandlung beim Unterprogrammaufruf wird mit einem Sprung in einen Eintrag der ersten Tabelle abgeschlossen. Dort wird eine Befehlssequenz durchlaufen, die den ursprünglichen ersten Befehl der übersetzten Unterprogrammdefinition enthält, der ja mit einem ersten Interruptbefehl überschrieben wurde. Diese Befehlssequenz endet schließlich mit einem Sprung an den zweiten Befehl der Unterprogrammdefinition. Hierbei wird vorausgesetzt, daß der erste Befehl der Unterprogrammdefinition kein Sprungbefehl ist und daß das Resultat seiner Ausführung unabhängig ist von der durch die Behandlung des Interrupts verursachten Kontextänderung. Damit ist die Umlenkung des Unterprogrammaufrufs abgeschlossen und das Unterprogramm kann in herkömmlicher Weise abgearbeitet werden.

Der Rücksprung am Unterprogrammende wird über die beim Aufruf manipulierte Rückkehradresse in die zweite Tabelle umgelenkt und der dort stehende zweite Interruptbefehl wird ausgeführt. Analog zur Interruptbehandlung beim Unterprogrammaufruf ist damit durch das Verfahren die Möglichkeit gegeben, das Unterprogrammende zu erfassen. Der Interrupt wird beendet durch einen Sprung an die ursprüngliche Rückkehradresse, die zu diesem Zweck in dem für diesen Unterprogrammaufruf temporär angelegten Eintrag in der zweiten Tabelle abgelegt wurde.

Der Ablauf des Verfahrens wird zur Erläuterung in vier Phasen eingeteilt:
1. Initialisierungsphase
2. Aktivierungsphase
3. Aktivphase
4. Deaktivierungsphase

In der Initialisierungsphase werden die beiden Tabellen aufgebaut. Diese Phase muß durchlaufen werden, bevor zum ersten Mal ein Unterprogramm beobachtet wird.

Die Aktivierungsphase wird angestoßen, sobald ein Unterprogramm zu beobachten ist. Um welches Unterprogramm es sich dabei handelt, kann in Form einer Adresse angegeben werden. An dieser Adresse beginnt die Codesequenz der entsprechenden Unterprogrammdefinition. Für jedes zu beobachtende Unterprogramm wird ein Element der ersten Tabelle belegt. In diesem Element wird der erste Befehl des Unterprogramms abgelegt. Außerdem enthält es einen Sprungbefehl zum zweiten Befehl der übersetzten Unterprogrammdefinition. Anschließend wird an der gegebenen Adresse der erste Befehl der Unterprogrammdefinition mit einem Interruptbefehl überschrieben.

In der Aktivphase wird bei einem überwachten Unterprogramm der eingebrachte erste Interruptbefehl ausgeführt. Bei der Behandlung dieses Interruptbefehls wird ein Eintrag in der zweiten Tabelle angelegt, die Rückkehradresse zum rufenden Programm am Kellerspeicher manipuliert und die Befehlsabarbeitung auf den entsprechenden Eintrag in der ersten Tabelle gelenkt, der für das gerufene Unterprogramm während der Aktivierungsphase angelegt worden ist. Durch die manipulierte Rückkehradresse wird bei Unterprogrammende in die zweite Tabelle verzweigt und dort der zweite Interruptbefehl ausgeführt. Der Eintrag in der zweiten Tabelle kann anschließend freigegeben werden und die Befehlsabarbeitung wird an der ursprünglichen Rückkehradresse fortgesetzt.

Um die Beobachtung eines Unterprogramms aufzuheben, wird die Deaktivierungsphase durchlaufen. Das betroffene Unterprogramm ist analog zur Aktivierungsphase durch seine Anfangsadresse gegeben. Der an dieser Stelle befindliche erste Interruptbefehl wird durch den ursprünglichen erste Befehl ersetzt. Damit werden alle nachfolgenden Aufrufe des Unterprogramms nicht weiter umgelenkt.

Um nun auch die Einträge in den beiden Tabellen freizugeben, müssen die besonderen Eigenschaften eines prozeßorientierten System berücksichtigt werden. Es ist nämlich möglich, daß mehrere Programme, die mehreren Prozessen entsprechen, zur gleichen Zeit sich in der Abarbeitung eines überwachten Unterprogramms befinden. Insbesondere können bei einem überwachten Unterprogramm Prozesse im Code der ersten oder zweiten Tabelle stehen.

Im Falle der zweiten Tabelle ist dies unproblematisch. Dort sind für jeden überwachten Unterprogrammaufruf Einträge vorhanden. Sie werden unbeeinflußt von der Deaktivierung der Unterprogrammüberwachung im normalen Verfahrensablauf freigegeben, sobald das aufrufende Programm die Unterprogrammbearbeitung beendet.

Anders ist dies bei der ersten Tabelle, in der für jedes zu überwachende Unterprogramm ein einziger Eintrag angelegt wurde. Dieser Eintrag kann erst freigegeben werden, wenn sich kein Prozeß mehr in seinem Codestück befindet. Ein solcher Prozeß würde nämlich einen Laufzeitfehler verursachen, sobald der freigegebene Eintrag für eine erneute Unterprogrammüberwachung wieder verwendet und dabei der Code verändert würde.

Um eine solche Fehlsituation zu verhindern, wird der Code des Eintrags in der ersten Tabelle in einen variablen und einen konstanten Teil gegliedert und zusätzlich für jeden Eintrag eine Zählervariable geführt, die angibt, wieviele Prozesse sich in dem variablen Codeteil des Eintrags befinden. Die Zählervariable wird im ersten Teil der Aktivphase inkrementiert und durch die Befehle des konstanten Codeteils des Eintrags wieder dekrementiert. Zwischen dem Inkrementieren und Dekrementieren wurde dann gerade der variable Codeteil ausgeführt.

Der variable Teil des Codestücks des Eintrags enthält den ursprünglichen ersten Befehl der Unterprogrammdefinition und weiterhin Befehle, die die Adresse des zweiten Befehls der Unterprogrammdefinition auf dem Kellerspeicher ablegen. Der konstante Teil beginnt mit den Befehlen zum Dekrementieren der Zählervariable und wird abgeschlossen durch einen Sprungbefehl, der seine Zieladresse, nämlich die Adresse des zweiten Befehls der Unterprogrammdefinition, am Kellerspeicher erwartet. Damit enthält der konstante Teil keine Angaben, die sich auf das zu überwachende Unterprogramm beziehen. Dieser Teil kann damit bereits in der Initialisierungsphase für jeden Eintrag angelegt werden und bleibt für alle nachfolgenden Phasen hinweg unverändert. Nur der variable Teil des Eintrags muß in der Aktivierungsphase an das zu überwachende Unterprogramm angepaßt werden.

Ein Eintrag in der ersten Tabelle kann also freigegeben werden, sobald sich kein Prozeß mehr in seinem variablen Codeteil befindet, erkennbar am Wert der Zählervariablen. Ist dies in der Deaktivierungsphase nicht der Fall, so wird lediglich ein Statuskennzeichen gesetzt, daß dieser Eintrag freigegeben werden kann. In diesem Fall durchlaufen Prozesse noch den zweiten Teil der Aktivphase. Sobald in dieser Phase wiederum anhand der Zählervariable erkannt wird, daß sich kein Prozeß mehr in dem variablen Codeteil des entsprechenden Eintrags in der ersten Tabelle befindet, und desweiteren dessen Statuskennzeichen gesetzt ist, kann der Eintrag in der ersten Tabelle freigegeben werden.

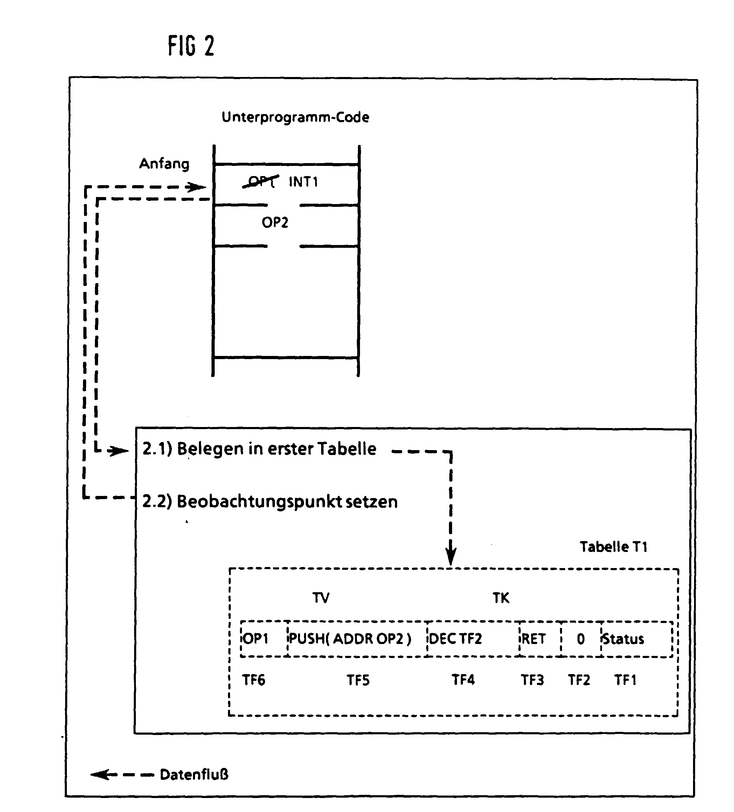

Die einzelnen Phasen des Verfahrens werden im folgenden ausführlich anhand der Figuren 2 bis 4 erläutert. Dabei wird vorausgesetzt, daß das Verfahren auf einem Prozessor abläuft, der eine Interruptbehandlung vorsieht und eine Speicherverwaltung enthält, die lesende, schreibende und ausführende Zugriffe auf die Tabellen ermöglicht.

In der Initialisierungsphase werden in den Verfahrensschritten 1.1 und 1.2 die beiden Tabellen initialisiert. Dabei wird in die Elemente der ersten Tabelle der konstante Codeteil eingetragen. Ein Beispiel eines Eintrags der ersten Tabelle T1 ist in Figur 2 gezeigt. Dieser Eintrag besteht aus dem konstanten Teil, der mit TK bezeichnet ist. Dieser konstante Teil TK wird während der Initialisierungsphase belegt. Das Feld TF1 enthält ein Statuskennzeichen, daß angibt, ob der Eintrag freizugeben ist. Als Wert der Zählervariable TF2 wird eine 0 eingetragen, die angibt, daß kein Prozeß sich im variablen Codeteil befindet. Im Feld TF3 wird ein Maschinenbefehl abgelegt, der einen Sprung an die zu oberst am Kellerspeicher liegende Adresse bewirkt. Im Feld TF4 ist ein Maschinenbefehl enthalten, der die Dekrementierung der Zählervariable TF2 bewirkt. Der variable Codeteil TV ist bisher unbelegt.

Weiterhin erfolgt in der Initialisierungsphase auch die Initialisierung der zweiten Tabelle. Die Einträge in dieser Tabelle werden jeweils mit dem zweiten Interruptbefehl vorbelegt.

Die in der Figur 2 dargestellte Aktivierungsphase besteht aus den Verfahrensschritten 2.1 und 2.2.

Im Schritt 2.1 (Belegung in erster Tabelle) wird für das zu überwachende Unterprogramm in der ersten Tabelle T1 ein freier Eintrag belegt und um den variablen Codeteil ergänzt. Im Feld TF6 wird der erste Befehl OP1 der Unterprogrammdefinition eingetragen. Im Feld TF5 wird ein Befehl (PUSH(ADDR OP2)) eingetragen, der das Laden der Adresse des zweiten Befehls OP2 in den Kellerspeicher veranlaßt.

Im folgenden Schritt 2.2 ( Beobachtungspunkt setzen) wird nun der erste Befehl in der Unterprogrammdefinition UP mit dem ersten Interruptbefehl überschrieben, der mit INT1 bezeichnet ist. Die Länge des ersten Interruptbefehls darf nicht die Länge des ersten Unterprogrammbefehls überschreiten. Diese Bedingung bedeutet im allgemeinen keine Einschränkung, insbesondere dann nicht, wenn ein Interruptbefehl der minimalen Befehlslänge zur Verfügung steht.

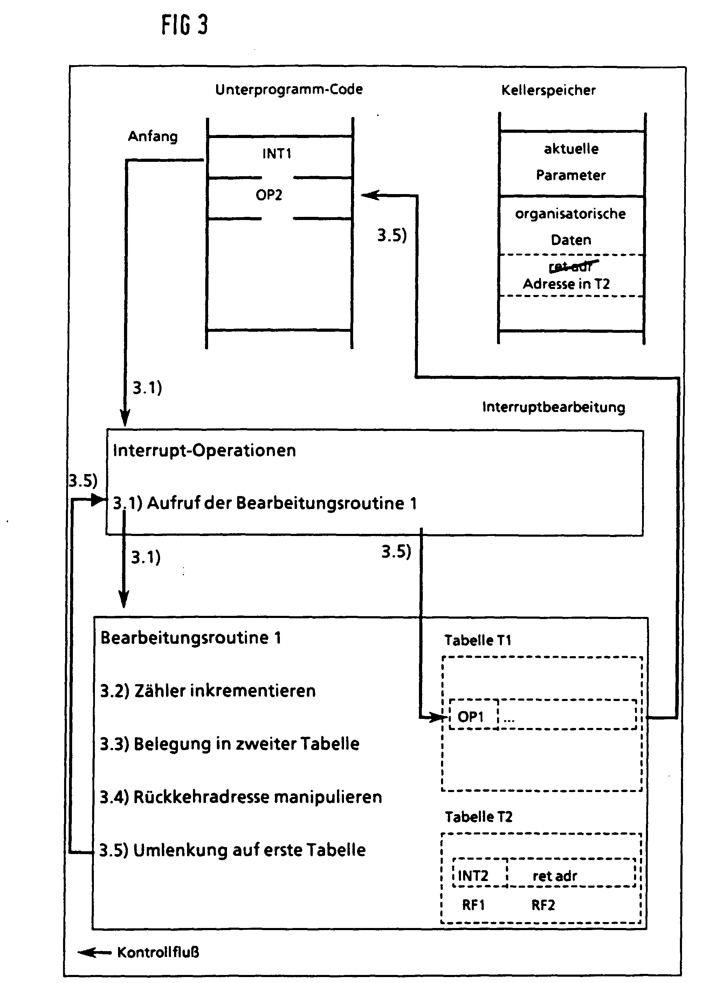

Der Ablauf der Aktivphase kann nun Figur 3 entnommen werden. Im ersten Verfahrensschritt 3.1 der Aktivphase (Aufruf der Bearbeitungsroutine 1) wird bei der Abarbeitung des Unterprogrammaufrufs der am Anfang der Unterprogrammdefinition stehende Interruptbefehl INT1 durchlaufen. Dessen Ausführung bewirkt, daß die Interruptbehandlung des Systems (Prozessors) die Kontrolle übernimmt. Dabei werden die Standardoperationen zur Behandlung eines Interrupts ausgeführt und die Beginnadresse des Unterprogramms an eine Bearbeitungsroutine übergeben. Innerhalb der Bearbeitungsroutine wird der Aufruf des Unterprogramms in der gewünschten Weise protokolliert.

Im Verfahrensschritt 3.2 (Zähler inkrementieren) wird in dem Eintrag der ersten Tabelle T1, welcher dem Unterprogramm zugeordnet ist, der Zähler erhöht. Er gibt an, wieviele Prozesse sich im variablen Codeteil TV des Eintrags befinden. Wegen der festen Zuordnung zwischen Tabelleneinträgen und zu überwachenden Unterprogrammen kann dieser Eintrag in der ersten Tabelle über die von der Interruptbearbeitung übergebene Adresse gefunden werden.

Im Verfahrensschritt 3.3 (Belegung der zweiten Tabelle) wird in der zweiten Tabelle T2 für diesen Unterprogrammaufruf ein Eintrag belegt. In diesem Eintrag wird die im Kellerspeicher stehende Rückkehradresse des Unterprogrammaufrufs vermerkt. Die zweite Tabelle ist in Figur 3 dargestellt und mit T2 bezeichnet. Ein Eintrag in T2 besteht aus einem Feld RF1, in dem der zweite Interruptbefehl INT2 steht und aus einem Feld RF2, in dem die Rückkehradresse "ret adr" eingetragen ist. Sollte kein Eintrag mehr frei sein, so muß auf die Erkennung und Protokollierung des Endes der Unterprogrammabarbeitung verzichtet werden. In diesem Fall wird der nächste Schritt 3.4 übersprungen und gleich mit 3.5 fortgefahren.

Im Verfahrensschritt 3.4 (Rückkehradresse manipulieren) wird im aktuellen Aktivierungsblock des Kellerspeichers (siehe Figur 1) die Rückkehradresse manipuliert. Sie wird mit der Adresse des soeben in der zweiten Tabelle belegten Eintrags überschrieben.

Im Verfahrensschritt 3.5 (Umlenkung auf erste Tabelle) wird an die Interruptbearbeitung die Adresse des Eintrags in der ersten Tabelle übergeben, der beim Setzen des Beobachtungspunktes in der Aktivierungsphase angelegt wurde. Dieser Eintrag wird anhand der übergebenen Beginnadresse des Unterprogramms in der ersten Tabelle T1 auf dieselbe Weise wie in Schritt 3.2 gefunden. Die Interruptbearbeitung veranlaßt, daß die Programmausführung an dieser Adresse fortfährt. Das heißt, es wird nun das Codestück des Eintrags in der ersten Tabelle durchlaufen und schließlich an den zweiten Befehl in der Unterprogrammdefinition gesprungen. Anschließend wird das Unterprogramm in gewohnter Weise abgearbeitet.

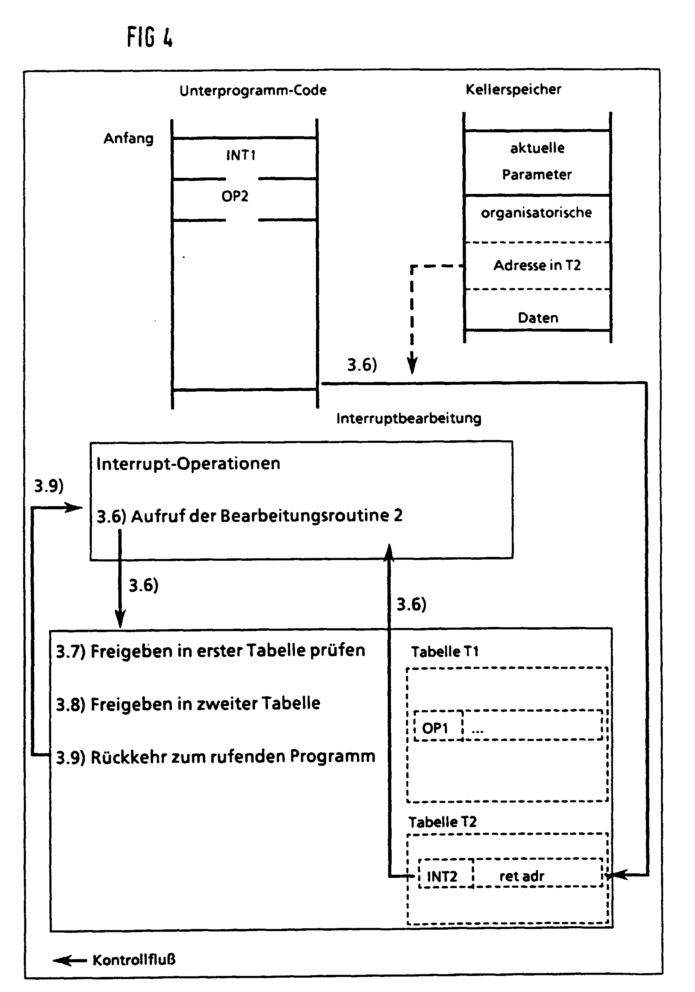

Im Verfahrensschritt 3.6 (Aufruf der Bearbeitungsroutine 2), der in Figur 4 dargestellt ist, beginnt der zweite Teil der Aktivphase. Bei Erreichen des Unterprogrammendes wird an die Adresse gesprungen, die als Rücksprungadresse im Aktivierungsblock abgelegt ist. Diese Rücksprungadresse wurde jedoch in dem vorangegangenen Schritt 3.4 ausgetauscht, sodaß nun der zweite Interruptbefehl INT2 in der zweiten Tabelle ausgeführt wird. Mit der Ausführung des zweiten Interruptbefehls INT2 erhält erneut die Interruptbearbeitung des Systems die Kontrolle. Die Interruptbehandlung übergibt die Codeadresse des Interruptbefehls an eine Bearbeitungsroutine. Analog zum Verfahrensschritt 3.1 wird nun das Unterprogrammende protokolliert.

Im Verfahrensschritt 3.7 (Freigeben in erster Tabelle prüfen) wird geprüft, ob das Unterprogramm weiter überwacht werden soll. Es wird geprüft, ob der Beobachtungspunkt am Anfang des Unterprogramms in der Zwischenzeit durch Deaktivierung entfernt wurde. Ist dies der Fall, so kann der Eintrag für diesen Beobachtungspunkt in der ersten Tabelle freigegeben werden, wenn die entsprechende Zählervariable ihren Initialwert 0 hat. Denn dann befindet sich kein Prozeß mehr in dem variablen Codeteil des Eintrags. Ein Eintrag in der ersten Tabelle wird also definitiv freigegeben, wenn die Überwachung des entsprechenden Unterprogramms deaktiviert ist und sobald der letzte Prozeß den variablen Codeteil des Eintrags verlassen hat.

Im Verfahrensschritt 3.8 (Freigeben in zweiter Tabelle) wird der Eintrag in der zweiten Tabelle freigegeben. Der Zugriff darauf erfolgt über die von der Interruptbehandlung übergebene Adresse.

Im Verfahrensschritt 3.9 (Rückkehr zum rufenden Programm) wird die Bearbeitungsroutine schließlich beendet und die ursprüngliche Rücksprungadresse an die Interruptbearbeitung zurückgegeben. Die Interruptbearbeitung veranlaßt, daß die Programmausführung an dieser Adresse fortfährt. Das Programm läuft damit an der dem Unterprogrammaufruf folgenden Anweisung weiter.
Die Deaktivierungsphase besteht aus den Verfahrensschritten 4.1 zund 4.2.

Im Verfahrensschritt 4.1 (Aufhebung des Beobachtungspunktes) wird der erste Befehl der Unterprogrammdefinition wieder hergestellt. Der ursprüngliche erste Befehl des Unterprogramms wurde ja in der ersten Tabelle beim Setzen des Beobachtungspunktes vermerkt. Dieser Befehl kann nun an die Beginnadresse im Unterprogramm übertragen werden. Der dort stehende erste Interruptbefehl INT1 wird somit überschrieben und die Programmausführung verläuft wieder gemäß dem regulären Unterprogrammkonzept.

Im Verfahrensschritt 4.2 (Freigeben in erster Tabelle) wird der Eintrag in der ersten Tabelle freigegeben, falls die Zählervariable den Wert 0 hat. Ist dies nicht der Fall, wird lediglich ein Statuskennzeichen gesetzt, daß dieser Eintrag freigegeben werden kann. Die tatsächliche Freigabe erfolgt dann in einem nachfolgenden noch zur Aktivphase gehörenden Verfahrensschritt 3.7.

## Patentansprüche

1. Verfahren zur maschinellen Überwachung des Ablaufs eines Programmssystems durch Feststellung von Anfang und Ende von vom Programmsystem aufgerufenen Unterprogrammen,
a) bei dem die für den Aufruf des Unterprogramms und für die Rückkehr zum Programmsystem erforderlichen Informationen in einem Kellerspeicher (KS) abgespeichert werden,
b) bei dem vor Programmlauf in einer Aktivierungsphase ein erster Befehl des Unterprogramms und die Adresse des nächsten Befehles als erster Eintrag in einer ersten Tabelle (T1) abgespeichert wird, und dieser erste Befehl im Unterprogramm durch einen ersten Interruptbefehl (INT1) ersetzt wird,
c) bei dem bei Programmlauf in einer Aktivphase bei Bearbeitung des Interruptbefehles (INT1) in einer zweiten Tabelle (T2) als zweiter Eintrag ein zweiter Interruptbefehl (INT2) und die Rückkehradresse zum aufrufenden Programm gespeichert wird,und die im Kellerspeicher enthaltene Rückkehradresse durch die Adresse des zweiten Eintrags der zweiten Tabelle ersetzt wird,
d) bei dem bei Programmlauf der erste Interruptbefehl (INT1) eine erste Interruptbearbeitungsroutine aufruft, die den Anfang des Unterprogramms protokolliert und der zweite Interruptbefehl (INT2) eine zweite Interruptbearbeitungsroutine aufruft, die das Ende es Unterprogramms protokolliert.

2. Verfahren nach Anspruch 1, bei dem nach Beendigung der Überwachung in einer Deaktivierungsphase der erste Interruptbefehl (INT1) gelöscht wird und durch den ersten Befehl aus der ersten Tabelle ersetzt wird.

3. Verfahren nach Anspruch 1 oder 2, bei dem nach Bearbeitung des zweiten Interruptbefehles (INT2) der zweite Eintrag in der zweiten Tabelle (T2) gelöscht wird und die Rückkehr zum aufrufenden Programm wieder auf die vor Änderung des Unterprogramms übliche Art erfolgt.

4. Verfahren nach einem der Ansprüche 1 - 3, bei dem nach Beendigung der Überwachung des Unterprogramms die im Kellerspeicher enthaltene Adresse des zweiten Eintrags der zweiten Tabelle durch die Rückkehradressse überschrieben wird.

5. Verfahren nach Anspruch 4, bei dem in einer Initialisierungsphase ein erster Teil des ersten Eintrags in der Tabelle (T1) unbeeinflußt bleibt, der restliche Teil für den Fall, daß mehrere Prozesse sich in der Abarbeitung eines überwachten Unterprogramms befinden können, ein erstes Zählfeld zur Zählung der das Unterprogramm aufrufenden Prozesse, ein Feld für die Kellerspeicheradresse für das Auffinden des dem ersten Befehl folgenden Befehles, ein Statusfeld und ein weiteres Zählerfeld zur Zählung der das Unterprogramm verlassenden Prozesse aufweist.

6. Verfahren nach Anspruch 5, bei dem der erste Teil des ersten Eintrags in einer die Überwachung startenden Aktivierungsphase mit dem ersten Befehl und mit einem Befehl geladen wird, der die Adresse des nächsten Befehles in den Kellerspeicher abspeichert.

## Claims

1. Process for machine monitoring of the operation of a program system by establishing the beginning and end of subprograms called up by the program system,
a) in which the items of information required for calling up the subprogram and for returning to the program system are stored in a push-down store (KS),
b) in which, before the program run, in an activation phase, a first command of the subprogram and the address of the next command are stored as the first entry in a first table (T1), and this first command is substituted in the subprogram by a first interrupt command (INT1),
c) in which, during the program run, in an active phase, when processing the interrupt command (INT1) a second interrupt command (INT2) and the return address to the calling program are stored in a second table (T2) as the second entry, and the return address contained in the push-down store is substituted by the address of the second entry of the second table,
d) in which, during the program run, the first interrupt command (INT1) calls up a first interrupt processing routine, which logs the beginning of the subprogram, and the second interrupt command (INT2) calls up a second interrupt processing routine, which logs the end of the subprogram.

2. Process according to claim 1, in which, after ending the monitoring in a deactivation phase, the first interrupt command (INT1) is erased and is substituted by the first command from the first table.

3. Process according to claim 1 or 2, in which, after processing the second interrupt command (INT2), the second entry in the second table (T2) is erased and the return to the calling program takes place again in the manner customary before changing the subprogram.

4. Process according to one of claims 1 - 3, in which, after ending the monitoring of the subprogram, the address of the second entry of the second table, contained in the push-down store, is overwritten by the return address.

5. Process according to claim 4, in which, in an initialization phase, a first part of the first entry in the table (T1) remains uninfluenced, the remaining part has, for the eventuality that there are a plurality of processes running a monitored subprogram, a first counting field, for counting the processes calling up the subprogram, a field for the push-down store address for finding the command following the first command, a status field and a further counting field for counting the processes leaving the subprogram.

6. Process according to claim 5, in which the first part of the first entry is loaded in an activation phase starting the monitoring with the first command and with a command which stores in the push-down store the address of the next command.

## Revendications

1. Procédé permettant de contrôler par machine le déroulement d'un système de programmes par détection du début et de la fin de sous-programmes appelés par le système de programme,
a) dans lequel les informations requises pour l'appel du sous-programme et pour le retour au système de programmes sont enregistrées dans une mémoire de pile (KS),
b) dans lequel, dans une phase d'activation avant l'exécution du programme, un premier ordre du sous-programme et l'adresse du prochain ordre sont enregistrés comme première entrée dans un premier tableau (T1) et ce premier ordre est remplacé dans le sous-programme par un premier ordre d'interruption (INT1),
c) dans lequel au cours de l'exécution du programme dans une phase active lors du traitement de l'ordre d'interruption (INT1), un second ordre d'interruption (INT2) et l'adresse de retour au programme appelant sont enregistrés dans un second tableau (T2), en tant que seconde entrée, et l'adresse de retour figurant dans la mémoire de pile est remplacée par l'adresse de la seconde entrée du second tableau,
d) dans lequel au cours de l'exécution du programme, le premier ordre d'interrruption (INT1) appelle une première routine de traitement d'interruption qui inscrit dans un protocole le début du sous-programme et le second ordre d'interruption (INT1) appelle une seconde routine de traitement d'interruption qui inscrit dans un protocole la fin du sous-programme.

2. Procédé selon la revendication 1, dans lequel après la fin du contrôle dans une phase de désactivation, le premier ordre d'interruption (INT1) est effacé et remplacé par le premier ordre du premier tableau.

3. Procédé selon la revendication 1 ou 2, dans lequel, après le traitement du second ordre d'interruption (INT2), la seconde entrée dans le second tableau (T2) est effacée et le retour au programme appelant se fait à nouveau de la manière qui était habituelle avant la modification du sous-programme.

4. Procédé selon l'une des revendications 1 à 3, dans lequel après la fin du contrôle du sous-programme, l'adresse figurant dans la mémoire de pile de la seconde entrée du second tableau est recouverte par l'adresse de retour.

5. Procédé selon la revendication 4, dans lequel dans une phase d'initialisation une première partie de la première entrée dans le tableau (T1) reste non-influencée, la partie restante étant présente pour le cas où plusieurs processus se trouveraient en cours de traitement d'un sous-programme contrôlé, un premier champ de comptage pour compter les processus appelant le sous-programme, un champ pour l'adresse de la mémoire de pile pour trouver l'ordre qui suit le premier ordre, un champ d'état et un autre champ de comptage pour compter les processus qui quittent le sous-programme.

6. Procédé selon la revendication 5, dans lequel la première partie de la première entrée dans une phase d'activation, qui met le contrôle en marche, est chargée avec le premier ordre et avec un ordre qui enregistre l'adresse du prochain ordre dans la mémoire de pile.
